# EUROPÄISCHE PATENTSCHRIFT

(11) **EP 1 274 526 B1**
(45) Veröffentlichungstag und Bekanntmachung des Hinweises auf die Patenterteilung: **03.03.2004**
(21) Anmeldenummer: 01919051.1
(22) Anmeldetag: 19.04.2001
(51) Int. Cl.: B22D 17/32, B29C 45/82, B30B 15/20, F15B 1/02, F15B 11/044

(54) **VERFAHREN SOWIE ANTRIEBSSYSTEM FÜR DIE STEUERUNG/REGELUNG DER LINEAREN PRESS-/GIESSBEWEGUNG**
METHOD AND DRIVE SYSTEM FOR THE CONTROL/REGULATION OF LINEAR PRESSURE/CAST MOVEMENT
PROCEDE ET SYSTEME D'ENTRAINEMENT DESTINES A LA COMMANDE/REGULATION DU MOUVEMENT LINEAIRE DE COMPRESSION/COULEE

(30) Priorität: 20.04.2000 CH 793002000
(43) Veröffentlichungstag der Anmeldung: 15.01.2003
(73) Patentinhaber: ProControl AG, 9230 Flawil (CH)
(72) Erfinder: STILLHARD, Bruno, CH-9011 St. Gallen (CH); SIEGRIST, Ronald, CH-9242 Oberuzwil (CH)
(74) Vertreter: Ackermann, Ernst, Dipl.-Ing. HTL
(86) Internationale Anmeldenummer: PCT/CH2001/000249
(87) Internationale Veröffentlichungsnummer: WO 2001/081027

(56) Entgegenhaltungen:
- EP-A- 0 908 413
- WO-A-94/22655
- WO-A-97/05387
- DE-B- 1 278 836
- US-A- 4 022 269
- PATENT ABSTRACTS OF JAPAN vol. 008, no. 061 (M-284), 23. März 1984 (1984-03-23) & JP 58 212850 A (TOSHIBA), 10. Dezember 1983 (1983-12-10)

## Beschreibung

### Technisches Gebiet

Die Erfindung betrifft ein Verfahren sowie ein Antriebssystem für die Steuerung/Regelung der linearen Press-/Giessbewegung mittels eines Antriebskolbens bei Spritzund Druckgiessmaschinen oder Pressen, wobei wenigstens auf der Arbeits- bzw. Kolbenstangenseite ein Hydraulikmedium verwendet wird.

### Stand der Technik

Bei Giessmaschinen oder Pressen ist die Press- oder Giessachse neben der Form an sich das eigentliche Herzstück der Maschine. Dies gilt z.B. auch für Kaltkammer- oder Magnesium-Warmkammer-Druckgiessmaschinen. Es werden hohe Einpresskräfte verlangt und praktische Arbeitsgiessgeschwindigkeiten von über 3 m/sec. bis 5 m/sec. In dem Bereich von Kunststoff-Spritzgiessmaschinen haben sich neben den klassischen, mit Oeldruckhydraulik angetriebenen Maschinen solche mit reinen Elektroantrieben in einem beachtlichen Ausmass bereits etabliert. Bei Kaltkammerund Warmkammer-Magnesium-Druckgiessmaschinen können alle Achsen, mit Ausnahme der Giessachse, elektromotorisch angetrieben werden. Hier liegt die Giessgeschwindigkeit noch höher. Praktisch ist es bei Maschinen mit mehr als 200 t Schliesskraft wirtschaftlich nicht sinnvoll, mit herkömmlicher Technik die extreme Forderung von Kraft und Geschwindigkeit zu erfüllen, ausser man basiert wie im Stand der Technik auf einem hydrostatischen Kolbenantrieb. Auch mit der neuen Erfindung muss dieser Tatsache Rechnung getragen werden. Diese geht deshalb für die Press- oder Giessachse von der Verwendung eines Hydraulikkolbens aus. Aber auch bei einer Kolbenlösung ist die Geschwindigkeit und damit die Steuerung/Regelung des Geschwindigkeitsverlaufes des Press- oder Giesskolbens, ein Begrenzungsfaktor.

Die US-PS 4 022 269, die als nächstliegender Stand der Technik angesehen wird, zeigt schematisch ein Antriebssystem für eine Druckgiessmaschine. Dabei wird die Kolbenrückseite mit einem Druckgas aus zwei Druckbehältern beaufschlagt. Die Druckgasbeaufschlagung erfolgt über entsprechende Drosseln und gesteuerten/geregelten Ventilen. Das Druckgas wirkt auf der Rückseite des Antriebskolbens. Auf der Vorderseite wird dagegen eine Druckflüssigkeit verwendet. Einerseits wird der Druck über eine Pumpe erzeugt und andererseits über ein Ventil abgelassen. Zwischen Pumpe und dem vorderen Kolbenraum, bzw. dem kolbenstangenseitigen Raum, ist ein Rückschlagventil angeorndet. Die Rückwärtsbewegung des Antriebskolbens erfolgt direkt über die Hydraulikpumpe. Bei der eigentlichen Arbeitsbewegung kommt Druckgas auf der Kolbenrückseite zum Einsatz. Das zu verdrängende Oel auf der Kolbenstangenseite wird nur über das Ventil abgelassen, da eine Rückströmung über die Pumpe durch das Rückschlagventil blockiert wird.

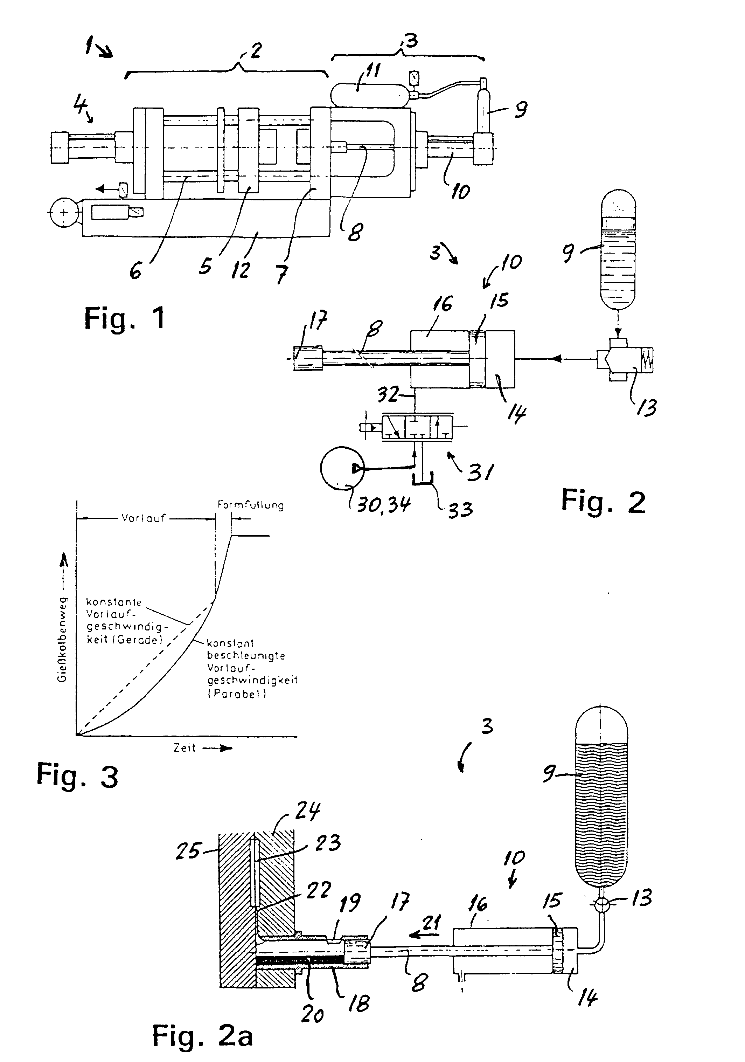

In der Folge werden an Hand einiger "Schulbeispiele" des Standes der Technik die Probleme rund um die Giessachse beschrieben: Eine ganze Druckgiessmaschine besteht aus einer Formschliesseinheit 2 sowie einer Giesseinheit 3 (Figur 1). Auf der Seite der Formschliesseinheit 2 befindet sich das Antriebssystem 4 für eine bewegliche Form 5, welche über Säulen 6 mit einer festen Aufspannplatte 7 kraftschlüssig verbunden ist. Die Giesskolbenstange 8 wird über einen Giessantrieb 10 bewegt, wobei im gezeigten Beispiel ein Druckspeicher 9 mit einem zusätzlichen Druckvorspeicher 11 ausgerüstet ist. Die Maschine ruht auf einem Maschinenbett 12.

Die Figuren 2 und 2a zeigen die Giesseinheit 3 einer Kaltkammermaschine mit dem Giessantrieb 10, schematisch in vergrössertem Massstab mit der Giessgarnitur (links), und weist die folgenden wichtigsten Bauelemente auf: Der Druckspeicher 9 ist über ein Schussventil 13 mit der Rückseite 14 des Antriebskolbens 15 verbunden für die Erzeugung des notwendigen Drucks für die drei Phasen (Figur 3): den Vorlaufdruck, die Formfüllung sowie den Formfülldruck. In dem Giessantriebszylinder 16 ist die Giesskolbenstange 8 kolbenstangenseitig fest mit dem Antriebskolben 15 verbunden. Die Giesskolbenstange 8 weist am anderen Ende einen Giesskolben 17 auf und ragt in eine Giesskammer 18, in welche über eine Füllöffnung flüssiges Metall 20 eindosiert wird. Das flüssige Metall 20 wird durch die Vorlaufbewegung, gemäss Pfeil 21, über einen Ausschnitt 22 in den Formhohlraum 23 der beiden Druckgiessformen 24 und 25 gepresst. Über nicht dargestellte Steuermittel werden die einzelnen Steuerfunktionen eingeleitet, vor allem für das Schussventil 13, eine Hydraulikpumpe 30 sowie ein Steuerventil 31. Über das Steuerventil 31 wird einerseits Öl mit dem gewünschten Druck über eine Leitung 32 für die Rücklaufbewegung des Giesskolbens 17 zugeführt. Bei der Vorlaufbewegung, also dem eigentlichen Giessvorgang, wird das durch die Bewegung des Antriebskolbens 15 verdrängte Oel auf der Kolbenstangenseite in einen Tank 33 abgelassen, gleicherweise wie der Rückfluss eines Druckbegrenzungsventiles 34. Die Figur 2 zeigt schematisch die Steuerung/Regelung des Giessantriebes mit einem Stetigventil mit der Möglichkeit der digitalen Echtzeitsteuerung.

Die Figur 3 zeigt ein bekanntes Beispiel für ein Weg-Zeit-Diagramm bei konstanter und konstant beschleunigter Vorlaufgeschwindigkeit. Deutlich markiert ist die Phase des Vorlaufes und der Formfüllung. Die konstante Vorlaufgeschwindigkeit ist als Gerade und die konstant beschleunigte Vorlaufgeschwindigkeit als Parabel erkennbar.

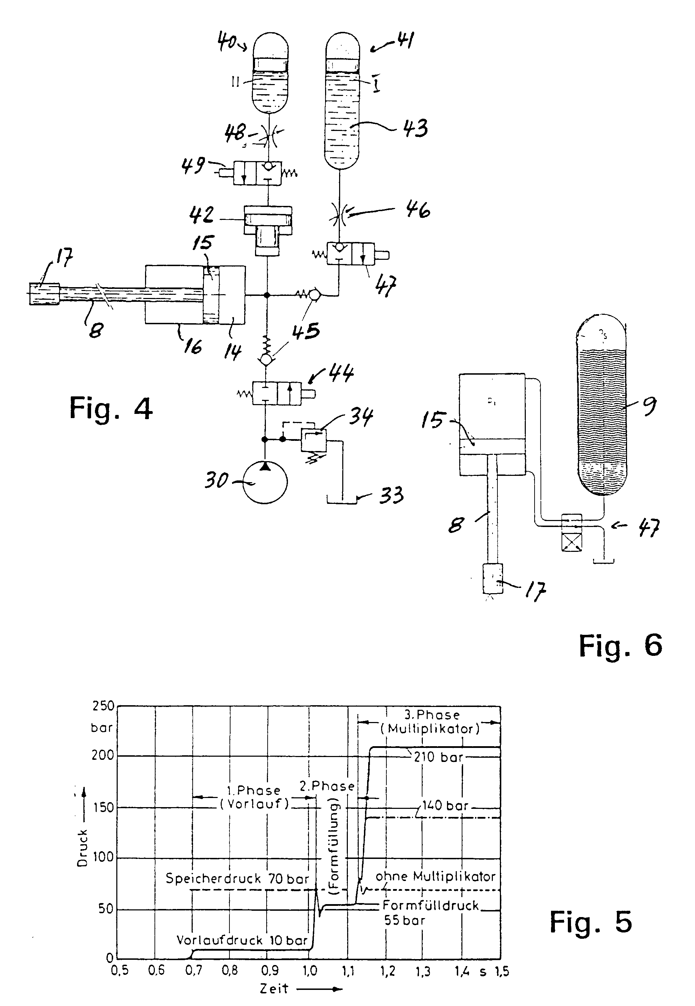

Die Figuren 4 und 5 zeigen einen komplexeren Giessantrieb mit zwei Kolbenspeichern 40, 41 sowie einem Multiplikator 42. Das Druckmedium ist in dem Beispiel, gemäss Figur 4, immer ein hydraulisches Fluid 43.

Die Figur 6 zeigt schematisch sinngemäss ein Beispiel für einen Warmkammer-Giessantrieb. Wie aus der Figur 5 ferner ersichtlich ist, bestehen bei dem Giesszyklus drei deutlich unterscheidbare Phasen: Für die erste Phase, die Vorlaufphase, wird das Druckmedium von der Pumpe über ein Vorlaufventil 44 sowie ein Rückschlagventil 45 auf die Rückseite 14 des Antriebskolbens 15 gefördert. Für die zweite Phase, die Formfüllung, wird der Kolbenspeicher I bzw. 41 über ein Geschwindigkeitsregelventil 46 und ein Schussventil 47 zugeschaltet. Für die dritte Phase, den Formfülldruck, wird der Kolbenspeicher II bzw. 40 über ein Regulierventil 48 sowie ein Multiplikatorventil und den Multiplikator 42 aktiviert. Der hydraulische Druck kann durch die dreistufige Arbeitsweise gemäss Beispiel von 55 bar auf 140 bar bzw. auf 210 bar gesteigert werden.

Der dargestellte Stand der Technik wurde dem Fachbuch "Praxis der Druckgussfertigung", Ernst Brunhofer, Verlag Schiele & Schön, Berlin (Ausgabe 1991), entnommen.

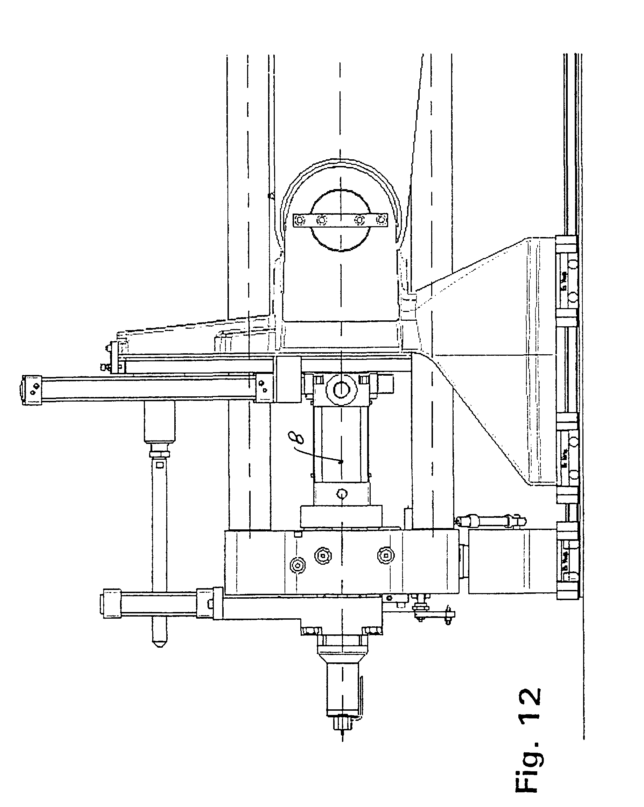

Die Figur 12 zeigt ein typisches Beispiel einer Presse. Im Stand der Technik ist die Geschwindigkeit des Presskolbens ist gleicherweise beschränkt wie die Geschwindigkeit bei Giesskolben.

### Darstellung der Erfindung

Der Erfindung wurde nun die Aufgabe gestellt, eine einfache Lösung für den Antrieb der Press- bzw. Giessachse zu finden, welche eine optimale Beherrschung der Giesskolbenbewegung und gegenüber dem Stand der Technik eine Steigerung der Press-/Giesskolbengeschwindigkeit erlaubt.

Das erfindungsgemässe Verfahren ist dadurch gekennzeichnet, dass die Press-/Giessbewegung in Bezug auf den kolbenstangenseitigen Oelfluss bzw. Oeldruck über eine Pumpe und wenigstens phasenweise zusätzlich über ein parallel zur Pumpe arbeitendes Drosselventil (34, 46) steuer-/regelbar ist.

Die erfindungsgemässe Vorrichtung ist dadurch gekennzeichnet, dass kolbenstangenseitig sowohl eine Pumpe und zusätzlich wenigstens eine parallel geschaltete Drossel angeordnet sind, derart, dass zumindest für den Bereich der schnellen Vorlaufbewegung, sowohl der Fluss über die Pumpe wie auch der Fluss über die Drossel über motorische Mittel gleichzeitig steuer-/regelbar sind.

Die neue Lösung hat vier ganz entscheidende Vorteile: Mit gleichzeitiger Nutzung von Pumpe und Drossel für den Rückfluss kann mit relativ kleinem baulichem Mehraufwand die Geschwindigkeit der Press-/Giessbewegung erhöht werden. Die Pumpe kann so klein wie möglich und die Drossel so gross wie nötig ausgelegt werden. Dies ergibt einen relativ günstigen baulichen Aufwand. Der Drosselabfluss, als der stark verlustbehaftete Weg, wird extrem kurzzeitig genutzt und damit die Drosselverluste minimiert. Es wird hierzu auf die EP 0 782 671 verwiesen. Die Pumpe kann über den Antriebsmotor beim Rückfluss zur Energierückgewinnung genutzt werden, da der Motor und die Pumpe als Generator arbeiten können.

Bei der Vorlaufbewegung kann die Pumpe als Motor und die über den Servomotor gewinnbare Energie für andere Achsen zu nutzen, und/oder einen Teil über DC-Kondensatoren zu speichern. Das ganze System kann ganz oder teilweise im Sinne eines Oszillators genutzt werden, dadurch, dass der grösstmögliche Energieanteil nur im System hin- und herverschoben und nicht vernichtet wird. Die neue Lösung gestattet, die anerkannten Vorteile eines elektrischen Antriebes im wesentlichen auf grösseren Maschinen von über 200 t Schliesskraft zu nutzen durch eine neue Kombination von Servomotor und Hydraulik. Die gesamten bisherigen Überlegungen für eine bessere Beherrschung der Press- oder Giessachse konzentrierten sich weitgehend auf die Kolbenrückseite und nicht auf die Kolbenstangenseite mit dem Ziel, den Kolben noch schneller und mit noch höheren Drücken zu beaufschlagen. Die neue Erfindung schliesst die entsprechenden zusätzlichen bau- und steuertechnischen Aufwendungen nicht aus, erlaubt jedoch für viele Fälle, diese zu vermeiden, und löst das Problem auf der anderen Seite der Press- oder Giessseite bzw. der Kolbenstangenseite. Es wird für einen rascheren und steuertechnisch anspruchsvolleren Abfluss des kolbenstangenseitigen Drucköles gesorgt und zwar ganz besonders in der Phase der grössten geforderten Kolbengeschwindigkeit. Es werden in der meist kritischen Phase zwei steuer/regeltechnisch auf höchstem Niveau kontrollierte Oelabflüsse geschaffen. Dies erlaubt, die einzelnen Bauelemente relativ klein zu wählen, da sich beide gegenseitig unterstützen.

Der überraschende Vorteil, z.B. gegenüber einer weitgehend dissipationsfreien Lösung bzw. einer Lösung ohne Regelventile, liegt darin, dass während unter Umständen weniger als 1/10 Sekunde pro Giesszyklus ein kleiner Energieverlust durch ein dissipationsbehaftetes Ventil in Kauf genommen wird. Die übrige Zeit kann durch die Wechselbewegung des Druckmediums auf der Kolbenrückseite und kolbenstangenseitig durch eine wechselweise Nutzung des Antriebsmotores dieser sowohl für die Pumpe als Motor oder aber als Generator genutzt werden, wie z.B. in der W097/05387 bzw. EP 0 782 671 vorgeschlagen wird. Wichtig ist ferner, dass die Möglichkeit besteht, auch bei einer dissipationsbehafteten Lösung auf der passiven Seite des Antriebes bei Drehrichtungsänderungen der Pumpe ein Lastwechsel in der Hydraulikpumpe oder in der Kupplung zwischen Motor und Pumpe zu vermeiden. Die Genauigkeit der Steuerung/Regelung für die Pumpenseite ist merklich erhöht.

Die neue Lösung erlaubt eine ganze Anzahl vorteilhafter Ausgestaltungen. Es wird dazu auf die Ansprüche 2 bis 7 sowie 9 bis 15 verwiesen. Eine besonders vorteilhafte Ausgestaltung ist dadurch gekennzeichnet, dass der Antrieb des Kolbens für die Vorlaufbewegung direkt oder indirekt durch ein Gas, insbesondere Stickstoff (N2), aus einem Stickstoffdruckbehälter über entsprechende Ventile erfolgt. Die Pumpe wird als Fixvolumenpumpe ausgebildet, und die Steuerung/Regelung, sowohl der Pumpe wie des Drosselventiles, erfolgt je über einen Servomotor. Sowohl die Pumpe wie auch der Drosselrückfluss wird als geschlossenes System mit einem geschlossenen, mehr oder weniger drucklosen Oelbehälter in der Form eines Druckspeichers, entsprechend Druckspeicher 9, verbunden. Bevorzugt wird dazu ein mit Vakuum entgastes Oel verwendet. Als Hydraulikflüssigkeit kann klassisches Hydraulikoel, ein chemisches Oel oder z.B. auch eine Wasser- und Glykolmischung verwendet. Die neue Lösung bietet den besonderen Vorteil, dass mit einer äusserst kleinen Menge an Hydraulikflüssigkeit, z.B. in der Grössenordnung von 10 - 20 Litern, gearbeitet werden kann, während bei den bekannten Lösungen ohne weiteres 100 - 200 Liter im System vorhanden ist. Ein weiterer Vorteil liegt - dank der Kleinstmenge an Hydraulikflüssigkeit - in einer extremen Reduktion des Brandrisikos.

Eine entsprechend vorteilhafte Ausgestaltung der Vorrichtung ist dadurch gekennzeichnet, dass dem Antriebskolben auf der Rückseite (für die Vorlaufbewegung) ein an sich bekannter Kolbenakku vorgeschaltet ist. Eine Gasbeaufschlagung erfolgt hier über ein Schnellschaltventil und eine direkte Verbindung mit einem Stickstoffdruckbehälter zu dem Kolbenakku. Ferner wird vorgeschlagen, die Pumpe als Fixvolumenpumpe mit Servomotorantrieb auszubilden. Die Drossel weist ebenfalls einen motorischen Verstellantrieb, insbesondere einen gesteuerten/geregelten Servomotor, auf, wobei der Übertrieb über ein Getriebe, eine Spindel oder einen Kurbeltrieb erfolgen kann. Bei einer bevorzugten Ausgestaltung weist der Verstellantrieb einen Spindelübertrieb mit Spindelmutter auf, wobei die Spindelmutter im Servoventil eingebaut ist und Servomotor, Spindel und Drossel eine kompakte Baueinheit bilden.

Die Drossel wird als Kolbenventil ausgebildet, wobei über den Servomotor sowie den Spindelübertrieb durch eine lineare Verschiebung direkt der Drosselquerschnitt einstellbar ist. Das Antriebssystem weist ferner Druckmessdosen für die Messung der Einpresskraft sowie ein Wegmesssystem für die Press-/Giesskolbenposition auf, weiter eine Steuerung/Regelung, welche als Mehrgrössenregelung ausgebildet ist und insbesondere die Position und/oder die Geschwindigkeit und/oder die Kraft des Antriebskolbens erfasst.

### Kurze Beschreibung der Erfindung

Die neue Lösung wird nun an Hand einiger Beispiele mit weiteren Einzelheiten erläutert. Es zeigen:
- die Figur 7: rein schematisch die neue Lösung;
- die Figur 8: die Figur 7 in etwas konkreterer Ausgestaltung;
- die Figur 9: das neue, motorisch verstellbare Drosselventil;
- die Figur 10: eine bildlich/schematische Darstellung einer Mehrgrössenregelung;
- die Figur 11: die Profile für verschiedene Parameter eines Giessvorganges;
- die Figur 12: eine Presse, bei welcher die neue Lösung für die Bewegung des Pressstempels eingesetzt wird.

### Wege und Ausführung der Erfindung

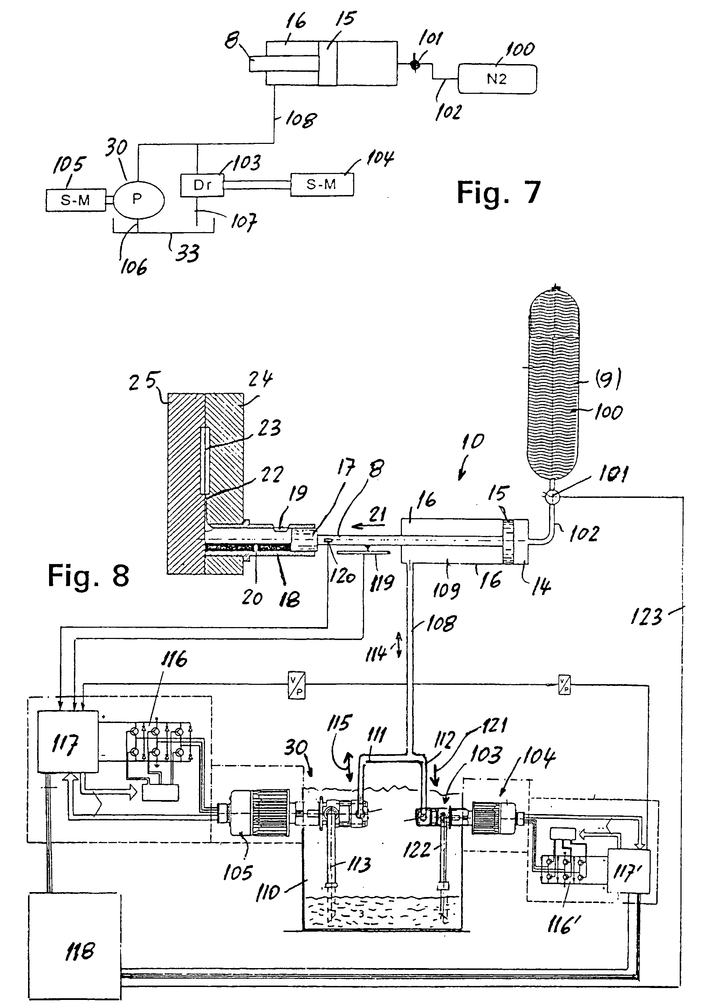

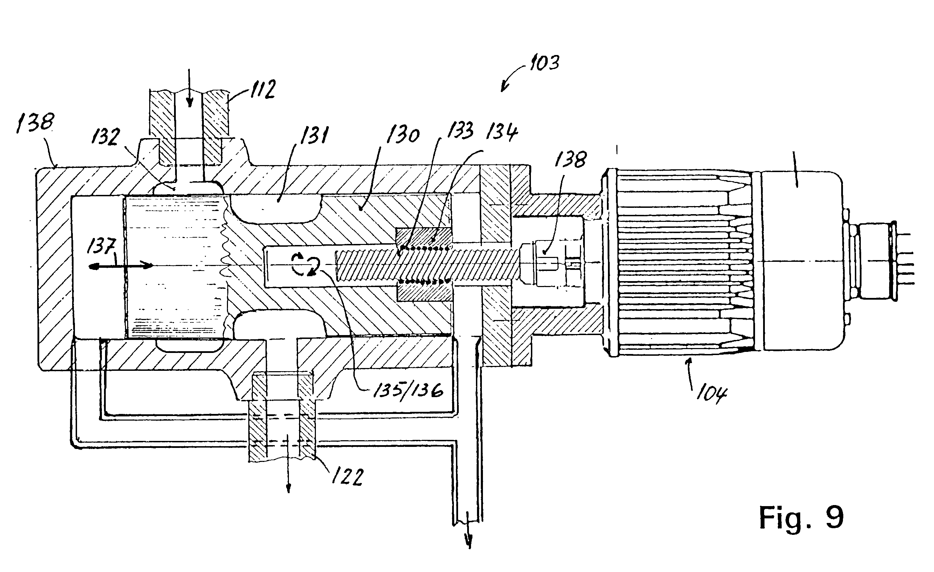

In den Figuren 7 und 8 ist erkennbar, dass die bauliche Ausgestaltung der Giessgarnitur unverändert ist gegenüber den bekannten Lösungen. Dagegen sind die Elemente für die Steuerung des Oelflusses auf der Kolbenstangenseite nach einem völlig neuen Konzept aufgebaut. Als Medium wird auf der Kolbenstangenseite ein flüssiges Medium, also Hydraulikoel, vorgeschlagen, das über eine Verbindungsleitung 108/111 zwischen dem kolbenstangenseitigen Raum 109 des Giessantriebszylinders 16 und einem vorzugsweise geschlossenen Tank 110 zirkuliert. Der Oelstrom fliesst durch die Leitung 108 und ist direkt über eine Pumpe 30 und eine Leitung 113 geführt. Wie mit den beiden Pfeilen 114 und 115 angedeutet ist, kann der Oelstrom je nach Bedarf in die eine oder andere Richtung fliessen. Der Antrieb der Pumpe 30 erfolgt über einen Servomotor 105 und weist die Eigenschaften auf, wie sie z.B. in der EP 782 671 bzw. W097/05387 beschrieben sind. Vor allem sind Servomotoren gekennzeichnet durch eine Leistungselektronik 116, über welche über eine Vorortelektronik 117 sowie eine übergeordnete Steuerung 118 alle wichtigen Parameter nahezu zeitgleich steuerbar sind. Es können Drucksensoren (V/P), Positionssensoren 119 und/oder Kraftsensoren 120 über entsprechende Signalleitungen mit der Vorortelektronik verbunden werden, insbesondere mit der Möglichkeit der Mehrgrössenregelung, wie diese z.B. in der W094/22655 für einen rein elektrischen Antrieb beschrieben ist.

Parallel zu der Leitung 111 ist eine zweite Leitung 112 von der Leitung 108 abgezweigt. Die Leitung 112 ist verbunden mit einer Drossel 103. Sinngemäss geht der Oelstrom durch die Leitung 112 nur in Abflussrichtung zu dem Tank 110, wie mit einfachem Pfeil 121 angegeben ist. Die Drossel 103 wird motorisch ebenfalls von einem Servomotor 104 angetrieben, so dass die zuvor erwähnte Steuerungstechnik/Regelungstechnik sinngemäss zur Anwendung kommt. Der Ausgang der Drossel 103 führt über eine Abflussleitung 122 zurück in den Tank 110. Der Oelzufluss in den Raum 109 erfolgt über die Pumpe 30. Der Abfluss kann dagegen entweder nur über die Pumpe und für die Phasen der grossen Geschwindigkeit für den Giesskolben, über beide Wege, also über die Pumpe 30 wie über die Drossel 103 erfolgen. Auf der Kolbenrückseite wird bevorzugt ein Gas, vor allem Stickstoffgas (N2), vorgeschlagen, das in einem Druckspeicher 100 gespeichert ist. die Kolbenrückseite kann auch oelbeaufschlagt sein, wobei dann ein Kolbenakku zwischen Kolbenrückseite und dem Gasdruckspeicher angeordnet wird.

Zwischen der Rückseite 14 des Kolbens 15 und dem Druckspeicher 100 befindet sich ein Schussventil 101 sowie eine Verbindungsleitung 102, so dass über eine Steuerleitung 123 über die übergeordnete Steuerung 118 ein Spritzzyklus eingeleitet und koordiniert werden kann.

Die Figur 9 zeigt ein Beispiel für die bauliche Ausgestaltung der Drossel 103 mit einem direkt angeflanschten Servomotor 104. Das Kernstück der Drossel 103 ist ein längsverschiebbarer Steuerkolben 130, der je nach Stellung des Verbindungsraumes 131 zwischen der Leitung 112 und der Abflussleitung 122 öffnet oder sperrt. Bei der gezeigten Stellung ist der Durchfluss gesperrt. Verfährt der Steuerkolben 130 nach links, so stellt sich ein mehr oder weniger grosser Drosselspalt zwischen der Druckseite bzw. dem Zuflussraum 132 sowie dem Verbindungsraum 131 ein. Die exakte Einstellung des Drosselspaltes erfolgt über eine Kugelspindel 133, welche in einer Mutter 134 in den Steuerkolben 130 gelagert ist. Eine Drehbewegung der Kugelspindel 133 im Uhrzeigersinn oder Gegenuhrzeigersinn, gemäss Pfeilen 135 bzw. 136, ergibt eine Verschiebung des Steuerkolbens 130 in Längsrichtung, gemäss Pfeil 137, im Drosselgehäuse 138. Die Spindel ist direkt über eine Kupplung 138 oder allenfalls über ein Zwischengetriebe mit der Welle des Servomotores 104 verbunden.

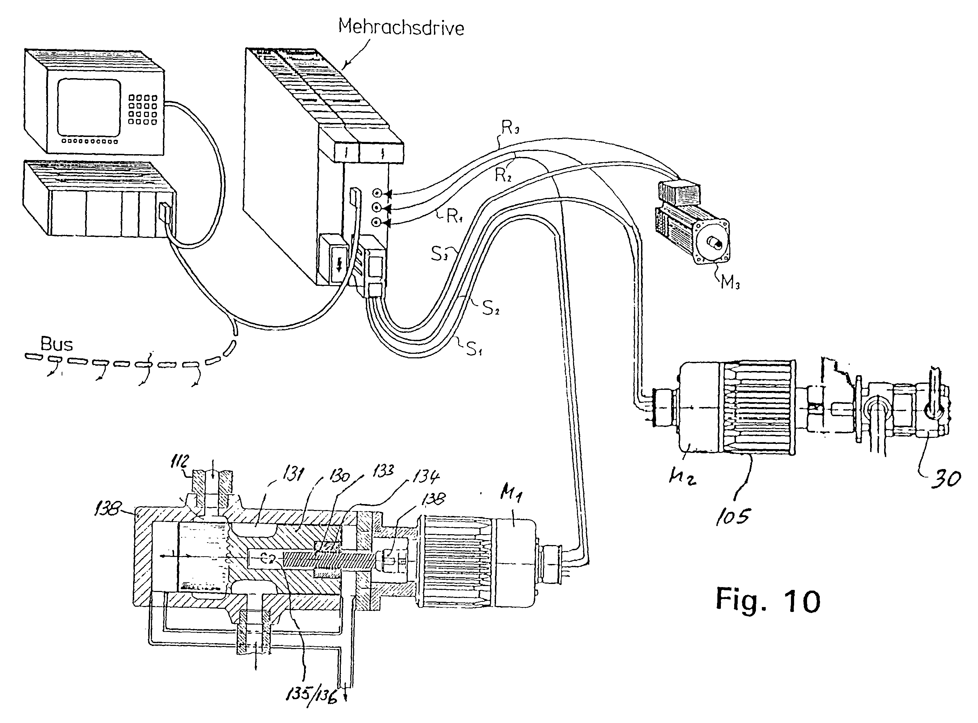

Die Figur 10 zeigt eine bevorzugte Steuer- und Regelungstechnik, im Sinne eines Mehrachsdrives, mit drei unabhängig und, soweit erforderlich, zeitlich steuer-/regelbaren Servomotoren M1, M2, M3. Mit S1, S2, S3 sind Steuersignalleitungen und mit R1, R2, R3 z.B. Positionsrückmeldeleitungen für jede Axe bezeichnet.

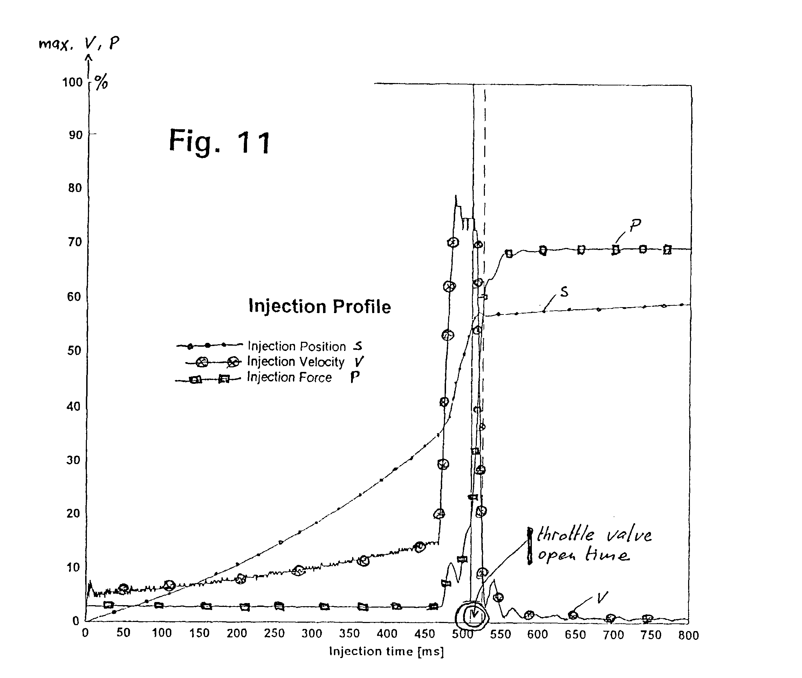

Die Figur 11 zeigt verschiedene Einspritzprofile, für Position, Geschwindigkeit und Kraft. Auffallend ist der enorme Geschwindigkeitsanstieg in dem Bereich von 450 bis 500 ms. Das Diagramm stellt vertikal den Einspritzdruck, bzw. Einspritzgeschwindigkeitsverlauf mit dem Maximum = 100%, und horizontal die Zeitachse in Millisekunden dar. Bei dem gezeigten Beispiel arbeitet die Drossel nur während 20 bis 30 ms. Die Pumpe kann relativ klein gewählt werden. Damit kann in der Grössenordnung 2/3 bis 3/4 der Energie im Vergleich zu einer Lösung des Standes der Technik gespart werden. Es ergeben sich eine praktische Einspritzgeschwindigkeit beim relativ langsamen Vorlauf von 0,5 bis 1,0 m/sec. mit der Pumpe allein und beim schnellen Einspritzen bzw. dem schnellen Schuss von 5 bis 10 m/sec mit Pumpe und Drosselventil.

Die Figur 12 zeigt die Anwendung der neuen Lösung bei einer Presse.

## Patentansprüche

1. Verfahren für die Steuerung/Regelung der linearen Press-/Giessbewegung mittels eines auf der Rückseite für die Vorlaufbewegung beaufschlagten Antriebskolbens bei Spritz- und Druckgiessmaschinen sowie Pressen, wobei auf der- Arbeits- bzw. -Kolbenstangenseite ein Hydraulikmedium verwendet wird,
**dadurch gekennzeichnet,**
**dass** für die Vorlaufbewegung entsprechend der Press- und. Giessbewegung der kolbenstangenseitige Oelabfluss bzw. Oeldruck über eine Pumpe (30) und ein Drosselventil (34, 46) mit je einem unabhängig gesteuert/geregelten Servomotor erfolgt, wobei
a) der relativ langsame Vorlauf über die Pumpe und
b) das -schnelle Einspritzen bzw. der schnelle Schuss über die Pumpe und das Drosselventil gesteuert/geregelt wird,
so dass der Drosselabfluss als der stark verlustbehaftete Weg kurzzeitig genutzt wird.

2. Verfahren nach-Anspruch 1,
**dadurch gekennzeichnet,**
**dass** der Antrieb des Kolbens für die Vorlaufbewegung durch Gasdruck, insbesondere Stickstoff (N2), aus einem Stickstoffbehälter über entsprechende Ventile erfolgt.

3. Verfahren nach Anspruch 2,
**dadurch gekennzeichnet,**
**dass** der Antriebskolben beidseits mit einem Hydraulikmedium und die Vorlaufbewegung über einen Kolbenakku betrieben wird.

4. Verfahren nach einem der Ansprüche 1 bis 3,
**dadurch gekennzeichnet,**
**dass** sowohl die Pumpe (30) wie auch der Drosselrückfluss mit einem vorzugsweise durch Folienbelag geschlossenen Oelbehälter (110) verbunden sind, und dass mit Vakuum entgastes Oel verwendet wird.

5. Verfahren nach einem der Ansprüche 1 bis 4,
**dadurch gekennzeichnet,**
**dass** beim Warmkammerverfahren der schnelle Schuss und beim Spritzgiessen die schnelle Einspritzung mit Pumpe (30) und Drosselventil (34, 46) steuer/regelbar ist.

6. Verfahren nach einem der Ansprüche 1 bis 5,
**dadurch gekennzeichnet,**
**dass** bei einer maximalen Oelflussleistung über Pumpe und Drosselventil entsprechend 100% die Pumpe (30) für einen Anteil 10 % bis 50 % vorzugsweise 15 % bis 30% ausgelegt ist.

7. Antriebssystem mit einer Steuerung/Regelung des Vorlaufes eines Antriebskolbens für die Press-/ Giessbewegung bei Spritz- und Druckgiessmaschinen -oder Pressen, wobei für die Vorlaufbewegung der Antriebskolben auf der Rückseite beaufschlagbar ist, und auf der Arbeits- bzw. Kolbenstangenseite ein Hydraulikmedium verwendet wird,
**dadurch gekennzeichnet,**
**dass** kolbenstangenseitig sowohl eine Pumpe (30) und zusätzlich wenigstens eine parallel zuschaltbare Drossel angeordnet ist,
wobei die Pumpe -und die wenigstens eine Drossel je einen unabhängig steuer-/regelbaren Servomotor aufweist, wobei die Steuerung/Regelung-derart ausgebildet ist, dass
a) der relativ langsame Vorlauf über die Pumpe steuer-/regelbar und
b) die schnelle Vorlaufbewegung bzw. das schnelle Einspritzen bzw. der schnelle Schuss über die Pumpe und das parallel zuschaltbare Drosselventil steuer- und regelbar ist.

8. Antriebssystem nach Anspruch 7,
**dadurch gekennzeichnet,**
**dass** der Antriebskolben (15) auf der Rückseite (14) (für die Vorlaufbewegung) eine Gasbeaufschlagung mit einer direkten Verbindung zu einem Stickstoffdruckbehälter aufweist.

9. Antriebssystem nach Anspruch 7 oder 8,
**dadurch gekennzeichnet,**
**dass** die Pumpe (30) als Fixvolumenpumpe ausgebildet ist.

10. Antriebssystem nach einem der Ansprüche 7 bis 9,
**dadurch gekennzeichnet,**
**dass** die Drossel (103) einen motorischen Verstellantrieb aufweist, wobei der Übertrieb über ein Getriebe, eine Spindel oder einen Kurbeltrieb erfolgt.

11. Antriebssystem nach Anspruch 10,
**dadurch gekennzeichnet,**
**dass** der Verstellantrieb einen Spindelübertrieb mit Spindelmutter aufweist, wobei die Spindelmutter im Servoventil eingebaut ist und Servomotor (104, 105), Spindel und Drossel (103) eine Baueinheit bilden.

12. Antriebssystem nach Anspruch 11,
**dadurch gekennzeichnet,**
**dass** die Drossel (103) als Kolbenventil ausgebildet ist, wobei über den Servomotor (104, 105) sowie den Spindelübertrieb durch eine lineare Verschiebung der Drosselquerschnitt direkt einstellbar ist.

13. Antriebssystem nach einem der Ansprüche 7 bis 12,
**dadurch gekennzeichnet,**
**dass** dieses Druckmessdosen für die Messung der Einpresskraft sowie ein Wegmesssystem für die Giesskolbenposition aufweist.

14. Antriebssystem nach einem der Ansprüche 7 bis 13,
**dadurch gekennzeichnet,**
**dass** dieses eine Steuerung/Regelung aufweist, welche als Mehrax- und/oder Mehrgrössenregelung ausgebildet ist, wobei insbesondere die Position und/oder die Geschwindigkeit und/oder die Kraft des Antriebskolbens (15) erfassbar ist.

## Claims

1. Method for control/regulation of the linear pressing/casting movement by means of a drive piston loaded on the back for the forward movement in injection moulding and die casting machines and presses, a hydraulic medium being used on the operating or piston rod side, **characterised in that** the oil flow or oil pressure on the piston rod side for the forward movement according to the pressing and casting movement is produced via a pump (30) and a throttle valve (34, 46) with a respective independently controlled/regulated servomotor, wherein
a) the relatively slow forward movement is controlled/regulated via the pump and
b) the fast injection or the fast shot is controlled/regulated via the pump and the throttle valve,
so the throttle discharge is briefly used as the path strongly affected by loss.

2. Method according to claim 1, **characterised in that** the piston for the forward movement is driven by gas pressure, in particular nitrogen (N2) from a nitrogen container via corresponding valves.

3. Method according to claim 2, **characterised in that** the drive piston is operated on either side by a hydraulic medium and the forward movement is operated via a piston battery.

4. Method according to any one of claims 1 to 3, **characterised in that** both the pump (30) and the throttle backflow are connected to an oil container (110), preferably closed by a foil covering, and **in that** oil degassed by vacuum is used.

5. Method according to any one of claims 1 to 4, **characterised in that** the fast shot can be controlled/regulated in the hot chamber method and the fast injection with a pump (30) and throttle valve (34, 46) during injection moulding.

6. Method according to any one of claims 1 to 5, **characterised in that** in the case of a maximum oil flow output via the pump and throttle valve corresponding to 100%, the pump (30) is designed for a proportion of 10% to 50% preferably 15% to 30%.

7. Drive system with control/regulation of the forward movement of a drive piston for the pressing/casting movement in injection moulding and die casting machines or presses, the drive piston being loadable on the back for the forward movement, and a hydraulic medium being used on the operating or piston rod side, **characterised in that** a pump (30) and also at least one throttle which can be connected in parallel is arranged on the piston rod side, the pump and the at least one throttle each having an independently controllable/regulatable servomotor, control/regulation being designed such that
a) the relatively slow forward movement can be controlled/regulated via the pump and
b) the fast forward movement or the fast injection or the fast shot can be controlled and regulated via the pump and the throttle valve which can be connected in parallel.

8. Drive system according to claim 7, **characterised in that** the drive piston (15) at the rear (14) has a gas loading device with a direct connection to a nitrogen pressure container (for the forward movement).

9. Drive system according to claim 7 or 8, **characterised in that** the pump (30) is designed as a fixed volume pump.

10. Drive system according to any one of claims 7 to 9, **characterised in that** the throttle (103) has a motor actuating drive, the overdrive taking place via a gearing, a spindle or a crank mechanism.

11. Drive system according to claim 10, **characterised in that** the adjusting drive has a spindle overdrive with a spindle nut, the spindle nut being installed in the servo-valve and the servomotor (104, 105), spindle and throttle (103) forming a module.

12. Drive system according to claim 11, **characterised in that** the throttle (103) is designed as a piston valve, the throttle cross-section being directly adjustable by a linear displacement via the servomotor (104, 105) and the spindle overdrive.

13. Drive system according to any one of claims 7 to 12, **characterised in that** it has pressure measuring boxes for measuring the pressing force and a path measuring system for the casting piston position.

14. Drive system according to any one of claims 7 to 13, **characterised in that** it has control/regulation designed as a multi-axis and/or multi-variable regulation, wherein in particular the position and/or the speed and/or the force of the drive piston (15) can be detected.

## Revendications

1. Procédé pour la commande/régulation du mouvement linéaire de compression/fusion au moyen d'un piston d'entraînement admis sur le côté postérieur pour le mouvement d'avance sur les machines de projection et les machines à couler sous pression, ainsi que les presses, dans lesquelles un milieu hydraulique est utilisé sur la face de travail et la face de la tige du piston,
**caractérisé en ce que**,
pour le mouvement d'avance selon le mouvement de compression et de fusion de l'écoulement d'huile ou la pression d'huile du côté de la tige du piston a lieu par une pompe (30) et une soupape d'étranglement (34, 46) avec un servomoteur commandé/régulé de façon indépendante, moyennant quoi
a) l'avance relativement lente est commandée/régulée par la pompe et
b) l'injection rapide ou le cycle de moulage rapide est commandé/régulé par la pompe et la soupape d'étranglement,
de sorte que l'écoulement d'étranglement est utilisé à court terme comme la course à forte perte d'adhérence.

2. Procédé selon la revendication 1,
**caractérisé en ce que**
l'entraînement du piston pour le mouvement d'avance par la pression de gaz, en particulier l'azote (N2), a lieu à partir d'un récipient d'azote via des soupapes correspondantes.

3. Procédé selon la revendication 2,
**caractérisé en ce que**
le piston d'entraînement est actionné des deux côtés avec un milieu hydraulique et le mouvement d'avance par un accumulateur de piston.

4. Procédé selon l'une quelconque des revendications 1 à 3,
**caractérisé en ce que**
autant la pompe (30) que le retour d'étranglement sont reliés à un récipient d'huile (110) fermé de préférence par un revêtement en feuille, et **en ce que** de l'huile dégazée par le vide est utilisée.

5. Procédé selon l'une quelconque des revendications 1 à 4,
**caractérisé en ce que**
lors du procédé de chambre chaude, le cycle de moulage rapide, et lors du moulage par injection, l'injection rapide peuvent être commandés/régulés par la pompe (30) et la soupape d'étranglement (34, 46).

6. Procédé selon l'une quelconque des revendications 1 à 4,
**caractérisé en ce que**
pour un débit d'écoulement d'huile maximal par la pompe et la soupape d'étranglement de 100 %, la pompe (30) est conçue pour une proportion de 10 % à 50 %, de préférence 15 % à 30 %.

7. Système d'entraînement avec une commande/régulation de l'avance d'un piston d'entraînement pour le mouvement de compression/fusion sur les machines de projection et les machines à couler sous pression ou les presses, moyennant quoi le piston d'entraînement pour le mouvement d'avance est situé sur le côté postérieur, et un milieu hydraulique est utilisé sur la face de travail ou la face de la tige de piston,
**caractérisé en ce que**
une pompe (30) et en plus au moins un étranglement pouvant être mis en circuit en parallèle est disposé sur le côté de la tige de piston,
moyennant quoi la pompe et au moins un étranglement comprend respectivement un servomoteur commandable/régulable indépendant, la commande/régulation étant configurées de telle sorte que
c) l'avance relativement lente peut être commandée/régulée par la pompe et
d) le mouvement d'avance rapide ou l'injection rapide ou le cycle de moulage rapide peut être commandé/régulé par la pompe et la soupape d'étranglement pouvant être mise en circuit en parallèle.

8. Système d'entraînement selon la revendication 7,
**caractérisé en ce que**
le piston d'entraînement (15) comprend sur le côté postérieur (14) (pour le mouvement d'avance) une admission de gaz avec une liaison directe à un récipient sous pression d'azote.

9. Système d'entraînement selon la revendication 7 ou 8,
**caractérisé en ce que**
la pompe (30) est configurée comme une pompe à volume fixe.

10. Système d'entraînement selon l'une des revendications 7 à 9,
**caractérisé en ce que**
l'étranglement (103) comprend un entraînement réglable motorisé, le pignon supérieur étant effectué via une transmission, une broche ou une commande à bielle.

11. Système d'entraînement selon la revendication 10,
**caractérisé en ce que**
l'entraînement réglable comprend un pignon supérieur de broche avec écrou de broche, l'écrou de broche étant intégré dans la servo-soupape, et le servomoteur (104, 105), la broche et l'étranglement (103) formant une unité modulaire.

12. Système d'entraînement selon la revendication 11,
**caractérisé en ce que**
l'étranglement (103) est configuré comme une soupape à piston, la section d'étranglement étant directement réglable par le servomoteur (104, 105) et le pignon supérieur de la broche par un décalage linéaire.

13. Système d'entraînement selon l'une quelconque des revendications 7 à 12,
**caractérisé en ce que**
celui-ci comprend une boîte dynamométrique pour la mesure de la force de compression et un système de mesure de la course pour la position du piston d'injection.

14. Système d'entraînement selon l'une quelconque des revendications 7 à 13,
**caractérisé en ce que**
celui-ci comprend une commande/régulation qui est configurée comme un réglage à axes multiples et/ou à grandeurs multiples, moyennant quoi en particulier la position et/ou la vitesse et/ou la force du piston d'entraînement (15) peut être enregistrée.
